# EUROPEAN PATENT APPLICATION

(11) **EP 4 485 667 A1**
(43) Date of publication of application: **01.01.2025**
(21) Application number: 22926688.7
(22) Date of filing: 28.07.2022
(51) Int. Cl.: H01M 50/457, H01M 10/0525

(54) **COATED SEPARATOR, PREPARATION METHOD FOR COATED SEPARATOR, AND BATTERY**

(30) Priority: 21.02.2022 WO PCT/CN2022/077087
(71) Applicant: Shenzhen Senior Technology Material Co., Ltd., Shenzhen, Guangdong 518106 (CN); Senior (Nantong) New Material Technology Co., Ltd., Nantong, Jiangsu 226010 (CN)
(72) Inventor: WANG, Yanjie, Shenzhen, Guangdong 518106 (CN); CHEN, Zelin, Shenzhen, Guangdong 518106 (CN); LIAO, Zhiheng, Shenzhen, Guangdong 518106 (CN); TAN, Bin, Shenzhen, Guangdong 518106 (CN); HUANG, Huizhen, Shenzhen, Guangdong 518106 (CN); LIU, Rui, Nantong, Jiangsu 226001 (CN); ZHANG, Xiaomin, Shenzhen, Guangdong 518106 (CN)
(74) Representative: PPR AG
(86) International application number: PCT/CN2022/108551
(87) International publication number: WO 2023/155382

(57) **Abstract**

The present invention provides a coated separator, a preparation method for coated separator, and a battery. The coated separator includes a base film and a coating layer structure arranged on the base film; the coating layer structure includes multiple material layers and includes one-dimensional nanomaterials and ceramic particles; and an average length of the one-dimensional nanomaterials in each material layer decreases layer by layer in a direction away from the base film. The average length of the one-dimensional nanomaterials in each material layer decreases layer by layer, and thus, possible large gaps formed due to unordered distribution of the one-dimensional nanomaterials can be avoided. In addition, the one-dimensional nanomaterials are mixed with the ceramic particles by adding the ceramic particles into the coating layer structure, thereby avoiding that the stacking density of the one-dimensional nanomaterials is too large, forming a more effective lithium ion transmission channel, increasing the lithium ion transmission rate, and effectively improving the performance of the separator and the performance of the battery.

## Description

### TECHNICAL FIELD

The present invention relates to the technical field of battery separators, and in particular to a coated separator, a preparation method for a coated separator and a battery.

### BACKGROUND

A separator is one of the core components of lithium batteries. Its performance has a very important impact on the overall performance of lithium batteries and is one of the key technologies restricting the development of lithium batteries. As the application field of lithium batteries continues to expand and the impact of lithium battery products in people's lives continues to deepen, people's demands for the performance of lithium batteries are also getting higher and higher. In order to meet the development requirements of lithium batteries, a separator, as an important component of lithium batteries, should have good chemical stability and low manufacturing costs, besides, it is also an important trend to improve the safety performance of lithium batteries in the current development of lithium batteries.

In the existing related art, a coated separator may include a base film and a coating layer coated on at least one surface of the base film. The coating layer may include one-dimensional nanomaterials. However, the one-dimensional nanomaterials are stacked in a chaotic manner, which leads to too many voids and few contact points, thereby affecting the thermal stability of the separator.

### SUMMARY

The present invention provides a coated separator, a preparation method for coated separator and a battery, so as to improve the performance of the separator.

According to a first aspect of the present invention, a coated separator is provided, including: a base film and a coating layer structure provided on at least one surface of the base film; where, the coating layer structure contains multiple material layers, and the coating layer structure contains one-dimensional nanomaterials and ceramic particles, and in a direction away from the base film, an average length of the one-dimensional nanomaterials in each material layer gradually decreases layer by layer.

Optionally, a proportion of a thickness of a coating layer distributed with ceramic particles in the coating layer structure to a total thickness of the coating layer structure reaches 80% or more.

Optionally, a mass ratio of the one-dimensional nanomaterials to the ceramic particles in the coating layer structure is 1:1-1:14.

In an embodiment, the ceramic particles include first ceramic particles and second ceramic particles; where, a particle diameter of the second ceramic particles is larger than a particle diameter of the first ceramic particles, and the particle diameter of the second ceramic particles is larger than a diameter of the one-dimensional nanomaterials;
further, the particle diameter of the second ceramic particles is two or more times the diameter of the one-dimensional nanomaterials;
further, the particle diameter of the second ceramic particles differs from the diameter of the one-dimensional nanomaterials by at least one order of magnitude,
and/or, the particle diameter of the second ceramic particles differs from the diameter of the first ceramic particles by at least one order of magnitude;
further, the diameter of the one-dimensional nanomaterials is 5-50 nm, an average particle diameter of the first ceramic particles is 10nm-60 nm, and an average particle diameter of the second ceramic particles is 100nm-600 nm.

Optionally, in the coating layer structure, a mass ratio of the first ceramic particles to the second ceramic particles is 5:1-1:5.

Optionally, the first ceramic particle and/or the second ceramic particle is an inorganic substance, which has a melting point above 200°C, is electrically insulating, and is electrochemically stable within a use range of lithium battery.

Optionally, a surface of the first ceramic particles is grafted with a fast lithium-ion conductor functional group;
further, the fast lithium-ion conductor functional group includes any one of hydroxyl (-OH), carbonyl (-C=O), fluorine (-F), and carboxyl (-COOH).

Optionally, the coated separator at least meets any of the following conditions:
a) anti-puncture force of coating layer ≥ 7N;
b) ion conductivity ≥ 0.8;
c) capacity retention rate ≥ 90%;
d) thermal contraction at 180°C/h ≤ 4%.

According to a second aspect of the present invention, a preparation method for coated separator is provided for preparing the coated separator related to the first aspect and the alternatives thereof, including:
dispersion of ceramics: dispersing the ceramic particles in a first solvent to obtain a ceramic dispersion liquid;
dispersion of one-dimensional nanomaterials: dispersing the one-dimensional nanomaterials of different lengths in the same or different dispersants to obtain at least one one-dimensional nanomaterial dispersion liquid;
mixing and forming a slurry: mixing the ceramic dispersion liquid and the one-dimensional nanomaterial dispersion liquid to form at least one corresponding slurry;
coating and forming a film: coating the at least one slurry on at least one surface of the base film and drying to obtain the coated separator.

Optionally, before the dispersion of ceramics, the method further includes:
ceramic screening: selecting first ceramic particles and second ceramic particles of different particle diameters, where an average particle diameter of the first ceramic particles is 10-60nm, and an average particle diameter of the second ceramic particles is 100-600nm;
further, the method includes a pretreatment for ceramic: adding the first ceramic particles to a second solvent and placing them in a reaction kettle, adding a material to be grafted to perform a grafting reaction, so that a fast lithium-ion conductor functional group is grafted on a surface of the first ceramic particles.

Optionally, the material to be grafted includes any one of polycarbonate, polylactic acid, polyurethane, perfluoropropyl vinyl ether, and methyl isopropyl ketone.

Optionally, the material to be grafted includes any one of polycarbonate, polylactic acid, polyurethane, perfluoropropyl vinyl ether, and methyl ethyl propyl ketone.

According to a third aspect of the present invention, a battery is provided, including the coated separator related to the first aspect and the optional solutions thereof or including the coated separator prepared by the preparation method for coated separator according to the second aspect and the optional solutions thereof;
further, the battery is a lithium battery.

In the coated separator, the preparation method for coated separator and the battery provided by the present invention, since an average length of the one-dimensional nanomaterials in each material layer decreases gradually layer by layer and is distributed in an orderly manner, on the one hand, the formation of large gaps resulted from the chaotic and disorderly distribution of one-dimensional nanomaterials can be avoided; on the other hand, in order to avoid that too large stacking density of one-dimensional nanomaterials affects the transmission of lithium ions, the present invention adds ceramic particles to the coating layer structure, so that the coating layer structure is a mixture of one-dimensional nanomaterials and ceramic particles. Addition of ceramic particles can avoid an excessive stacking density of one-dimensional nanomaterials, thereby forming a more effective lithium ion transmission channel, increasing the lithium ion transmission rate and effectively improving the performance of separator and battery.

### BRIEF DESCRIPTION OF DRAWINGS

In order to more clearly illustrate the technical solutions in the embodiments of the present invention or the prior art, the following will briefly introduce the drawings that need to be used in the description of the embodiments or the prior art. Obviously, the accompanying drawings in the following description are only some embodiments of the present invention. For those skilled in the art, other drawings can also be obtained according to these drawings without any creative effort.
FIG. 1 is a partial structural schematic diagram of a coated separator in an embodiment of the present invention.
FIG. 2 is a schematic flow chart of a preparation method for coated separator in an embodiment of the present invention.
FIG. 3 is a schematic diagram showing the change of a length value of 150 of a material layer with a coating layer position in a specific example of the present invention.

### Description of reference signs:

1-coated separator; 11-base film; 12-coating layer structure; 13-ceramic particles.

### DESCRIPTION OF EMBODIMENTS

The technical solutions in the embodiments of the present invention will be clearly and completely described below with reference to the accompanying drawings in the embodiments of the present invention. Obviously, the described embodiments are only some of the embodiments of the present invention, rather than all the embodiments. Based on the embodiments of the present invention, all other embodiments obtained by those skilled in the art without making creative efforts belong to the protection scope of the present invention.

In the description of the present invention, it should be understood that the orientation or positional relationship indicated by the terms "upper portion", "lower portion", "upper end", "lower end", "lower surface", "upper surface" and the like, which is based on the accompanying drawings, is only used to facilitate the description of the present invention and simplify the description, instead of indicating or implying that the device or element referred to must have a specific orientation or be constructed and operated in a specific orientation, and therefore cannot be understood as limiting the scope of the present invention.

In the description of the present invention, the terms "first" and "second" are only used for descriptive purposes and cannot be understood as indicating or implying relative importance or implicitly indicating the number of indicated technical features. Therefore, a feature defined by "first" or "second" may explicitly or implicitly include one or more such features.

In the description of the present invention, "a plurality of" means more, such as two, three, four, etc., unless otherwise clearly and specifically limited.

In the description of the present invention, unless otherwise clearly stated and limited, the terms "connection" and the like should be understood in a broad sense. For example, it may be a fixed connection, a detachable connection, or an integrated connection; it may be a mechanical connection, an electrical connection or in communication with each other; it may be a direct connection, or an indirect connection through an intermediate medium; it may be an internal connection of two components or an interaction relationship between two components. For those of ordinary skill in the art, the specific meanings of the above terms in the present invention can be understood according to specific circumstances.

The technical solution of the present invention will be described in detail below with specific embodiments. The following specific embodiments can be combined with each other, and the same or similar concepts or processes may not be repeated again in some embodiments.

Before proposing this application, the applicant conducted a series of research and experiments on existing separators.

Where, in order to solve the problem that the accumulation of one-dimensional nanomaterials in the coating layer is chaotic and disorderly, which is prone to too many voids and few contact points, the applicant proposed a corresponding solution, by making a length of the one-dimensional nanomaterials decrease gradually layer by layer (reflected by a decrease of a length description value of one-dimensional nanomaterials in each material layer). Since a void accumulated by long nanomaterials is large, the closer to a bottom layer, the larger the void, and the shorter nanomaterials on an upper layer can fill these voids to a certain extent, after a layer-by-layer deposition, there are no too many voids inside the coating layer, and there are more contact points. When heated, the compact structure of the coating layer can inhibit a thermal deformation of the separator, thereby improving heat resistance of the coated separator. For this solution, the applicant also proposed a patent application (application number: PCT/CN2022/077087, application date: February 21, 2022), and the present application introduces the entire content of PCT/CN2022/077087, namely all content of PCT/CN2022/077087 can be used as support for the present application.

However, the applicant found in further research that although the above solution can improve the heat resistance of the separator compared to the disordered arrangement of one-dimensional nanomaterials, the overall performance of the separator is still not ideal. The applicant found through research and experiments that the reason is that the stacking method of length of one-dimensional nanofiber decreasing layer by layer makes the coating layer have the greatest packing density and also makes the nanofiber have the most contacts with each other. However, an excessively high packing density of one-dimensional nanofiber hinders the transmission channel of lithium ions, affects the transmission rate of lithium ions, and then limits the performance of the separator.

Based on this discovery, and through a series of research, tests and verifications, the applicant obtained the technical solution of the present application. Since an orderly arrangement of one-dimensional nanofiber is a major initiative of the applicant, the problems for further research and solutions obtained based on the orderly arrangement are also a major initiative, and the entire research process should be regarded as an inseparable part of this solution, and considered as a whole when evaluating the creativity of the present application.

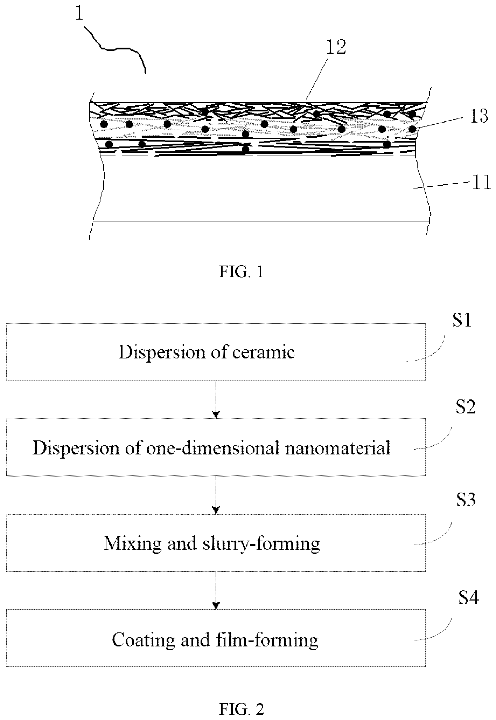

Please refer to FIG. 1. An embodiment of the present invention provides a coated separator 1, including: a base film 11 and a coating layer structure 12 provided on the base film 11. The coating layer structure 12 contains multiple material layers, One-dimensional nanomaterials and ceramic particles 13 are distributed in the coating layer structure 12. Along a direction away from the base film, an average length of the one-dimensional nanomaterials in each material layer decreases layer by layer. Correspondingly, an average size of gap between the one-dimensional nanomaterials in each material layer also gradually decreases.

In the embodiment of the present invention, considering that the problem of a low ion conduction rate resulted from excessively small gaps due to an excessively dense coating layer of one-dimensional nanomaterials, introduction of ceramic particles can effectively improve the ion conduction rate. However, if the one-dimensional nanomaterials are distributed disorderly, in a case of introducing external ceramic particles, it is prone to disordered mixing, which results in a phenomenon that in some local areas, the lithium ion transmission channels are small, while in other local areas, the lithium ion transmission channels are large, making the transmission speed of lithium ions in different areas very different, thus easily causing problems in the growth and development of lithium dendrites (which can easily lead to self-discharge), further causing battery capacity attenuation and safety issues. In the present application, on the basis of reducing the average length of the one-dimensional nanomaterials in each material layer layer by layer, ceramic particles are incorporated into the one-dimensional nanomaterials; and the use of the ceramic particles can avoid an excessive stacking density of the one-dimensional nanomaterials, thereby forming more effective lithium ion transmission channels, and increasing a lithium ion transmission rate, which can effectively improve the performance of separators and batteries.

As a preferred embodiment, a mass ratio of the one-dimensional nanomaterials to the ceramic particles in the coating layer structure 12 is 1:1-1:14. As a specific embodiment, for example, the mass ratio of the one-dimensional nanomaterials to the ceramic particles in the coating layer structure 12 can be any one of 1:1, 1:2, 1:3, 1:4, 1:5, 1:6, 1:7, 1:8, 1:9, 1:10, 1:11, 1:12, 1:13, and 1:14, or a range between any two of them. Of course, the mass ratio of the one-dimensional nanomaterials to the ceramic particles in the coating layer structure 12 can also take other values. The specific values are not limited in the present invention, as long as the ratio is between 1:1 and 1:14, they are all within the protection scope of the present invention.

As a preferred embodiment, the ceramic particles in the coating layer structure 12 include first ceramic particles and second ceramic particles; where a particle diameter of the first ceramic particles is comparable to a diameter of the one-dimensional nanomaterials; and the particle diameter of the second ceramic particles is much larger than the diameter of the one-dimensional nanomaterials.

Specifically, the diameter of the one-dimensional nanomaterials is 5-50 nm, an average particle diameter of the first ceramic particles is 10-60 nm, and an average particle diameter of the second ceramic particles is 100-600 nm.

In the embodiment of the present invention, the one-dimensional nanomaterials distributed in layers are mixed with multi-scale ceramic particles. The one-dimensional nanomaterials at the bottom are long and the one-dimensional nanomaterials at the top are short. They are evenly distributed and have small difference in different regions. The introduced multi-scale ceramics can fully accelerate the transmission of lithium ions. Where, the layering refers to a layering formed by obvious changes in the size of the nanofiber in a thickness direction, which can be multiple layers that are essentially separable, or can also be an artificial layering based on obvious size changes (e.g., 10% of a total thickness of a coating layer is defined as one layer, or 20%, 30%, 40%, etc. of the total thickness of the coating layer is defined as one layer; the layering can also be defined based on an interface where the size changes significantly in the structure, which is not specifically limited here).

As a preferred embodiment, a proportion of a thickness of a coating layer distributed with ceramic particles 13 in the coating layer structure 12 to a total thickness of the entire coating layer structure reaches 80% or more, preferably 90% or more, and more preferably 100%. In this way, the ceramic particles are relatively evenly dispersed in the coating layer structure to more effectively avoid an excessive stacking density of one-dimensional nanomaterials, thereby forming more effective lithium ion transmission channels, increasing the lithium ion transmission rate, and effectively improving the performance of separators and batteries. Besides, as a further preferred embodiment, when the coating layer structure has an obvious layering, each layer contains ceramic particles, which can further increase the transmission rate of lithium ions and improve the performance of separators and batteries.

Besides, by setting an average particle diameter (D50) of the first ceramic particles to be comparable to a diameter of the one-dimensional nanomaterials, the gaps between the one-dimensional nanomaterials can be expanded and then improve the lithium ion conductivity; by setting an average particle diameter (D50) of the second ceramic particles to be much larger than the average particle diameter of the first ceramic particles and the diameter of the one-dimensional nanomaterials, the anti-puncture property of the coating layer against the outside can be improved. Where, the meaning of "much larger than" herein represents 2 times or more. The applicant has confirmed through research that if the average particle diameter of the first ceramic particles is too small, it is prone to serious agglomeration, which will lead to a low lithium ion conductivity of the coating layer; and if the average particle diameter of the first ceramic particles is too large, it will not fully fill into the gaps between the one-dimensional nanomaterials. If the average particle diameter of the second ceramic particles is too small, the anti-puncture property will be reduced, and if the average particle diameter of the second ceramic particles is too large, the heat resistance of the coating layer will be sacrificed. Therefore, the average particle diameter of the first ceramic particles proposed in the present application is 10-60 nm, and the average particle diameter of the second ceramic particles is 100-600 nm, which are the preferred values after verification.

As a specific implementation, the average particle diameter of the first ceramic particles may be, for example, any one of 10 nm, 15 nm, 20 nm, 25 nm, 30 nm, 35 nm, 40 nm, 45 nm, 50 nm, 55 nm, and 60 nm, or a range between any two of them. The average particle diameter of the second ceramic particles may be, for example, any one of 100 nm, 150 nm, 200 nm, 250 nm, 300 nm, 350 nm, 375 nm, 400 nm, 450 nm, 500 nm, 550 nm, and 600 nm, or a range between any two of them. Of course, the average particle diameter of the first ceramic particles and the average particle diameter of the second ceramic particles can also take other values. The specific values are not limited in the present invention. As long as the average particle diameter of the first ceramic particles is 10-60 nm and the average particle diameter of the second ceramic particles is 100-600 nm, they all fall within the protection scope of the present invention. And those skilled in the art should know that when the diameter of the one-dimensional nanomaterials changes, the average particle diameter of the first ceramic particles and the average particle diameter of the second ceramic particles will also change accordingly. As long as the particle diameter of the first ceramic particles is comparable to the diameter of the one-dimensional nanomaterials, and the particle diameter of the second ceramic particles is much larger than the diameter of the one-dimensional nanomaterials, they will not deviate from the scope of protection of the present invention.

As a further preferred implementation, in the coating layer structure, a mass ratio of the first ceramic particles to the second ceramic particles is 5:1-1:5; thereby further improving the ion conductivity of the coating layer, and at the same time, guaranteeing the anti-puncture property of the coating layer (the anti-puncture force of the coating layer ≥ 7N) and the thermal contraction performance (180°C/1h ≤ 4%) more effectively. The applicant found that when there are too many first ceramic particles, it is prone to a poor anti-puncture property, and if there are too few first ceramic particles, the expanding caused will be limited, thereby reducing the conductivity of lithium ions; and too many second ceramic particles will lead to a decrease in heat resistance, and too few second ceramic particles will lead to a decrease in anti-puncture property. Therefore, the mass ratio of the first ceramic particles to the second ceramic particles in the coating layer structure proposed in the present application is 5: 1-1:5, which is a preferred value after verification.

Specifically, the mass ratio of the first ceramic particle to the second ceramic particle in the coating layer structure can be, for example, any one of 5:1, 4:1, 3:1, 2:1, 1:1, 1:2, 1:3, 1:4, and 1:5, or a range between any two of them. Of course, the mass ratio of the first ceramic particles to the second ceramic particles in the coating layer structure can also take other values, and the specific values are not limited in the present invention. As long as the mass ratio is within 5:1-1:5, it falls into the protection scope of the present invention.

As a further preferred implementation, a surface of the first ceramic particles is grafted with a fast lithium-ion conductor functional group. Specifically, the fast lithium-ion conductor functional group is introduced on the surface of the first ceramic particles through a grafting reaction. The fast lithium-ion conductor functional groups abundant on the surface of the first ceramic particles can greatly improve the lithium ion transmission capability. The grafted functional groups only work on the surface of the ceramic, and the particle diameter of the second ceramic is larger than that of the first ceramic, so the gap formed by the second ceramic particle is larger, and it is difficult for the fast ion conductor functional group to work; while the particle diameter of the first ceramic is small, and the gap formed by the first ceramic particles is small, which can better promote the effect of the fast lithium-ion conductor and improve the lithium ion conductivity.

Regarding the manner in which the length of the one-dimensional nanomaterials decreases layer by layer along the coating layer in the embodiments of the present invention, further details are as follows.

Where, the coating layer has three material layers as shown in FIG. 1 (here, the layering is defined based on the interface where the size change is obvious in the coating layer structure). Where, the average length of the one-dimensional nanomaterials in the bottom layer is longer than the average length of the one-dimensional nanomaterials in the middle layer, which is in turn longer than the average length of the one-dimensional nanomaterials in the top layer. A difference in average length among respective layers of one-dimensional nanomaterials can be configured arbitrarily. The lengths of the one-dimensional nanomaterials in the same layer may be the same or different. In one embodiment, the one-dimensional nanomaterials may be at least one of the following: nanocellulose, aramid nanofiber, and polyimide nanofiber. The material selection of the one-dimensional nanomaterials in the embodiments of the present invention is not limited to the above examples.

In one embodiment, the one-dimensional nanomaterials in different material layers form different length description values for the same second target proportion.

The length description value of the one-dimensional nanomaterials in the material layer indicates:
when the quantity of the one-dimensional nanomaterials in a material layer structure is gradually accumulated in an order from short to long, a ratio of the accumulated quantity to a total quantity of the one-dimensional nanomaterials in the material layer reaches the corresponding length of the one-dimensional nanomaterials when the second target proportion is reached; correspondingly, among the one-dimensional nanomaterials in the corresponding material layer, the proportion of the one-dimensional nanomaterials having a length smaller than the corresponding length description value can reach the target proportion; the above description shows the statistical significance of the length description value of the one-dimensional nanomaterials. When the length description value is actually determined, an actual calculation method can be processed according to common sense in the field.

In an example, the second target proportion is in a range of 5%-40%, or in a range of 60%-99%. For example, it can be any one of 5%, 10%, 20%, 40%, 60%, 70%, 80%, 90%, and 99%, or a range between any two of them.

Where, in one embodiment, along the direction away from the base film, for the same second target proportion, the length description value of the one-dimensional nanomaterials of each material layer gradually decreases. Furthermore, a layer-by-layer reduction trend of one-dimensional nanomaterials can be formed.

In addition, for the length description value of the corresponding material layer, although the meaning of the length description value is defined above by accumulating the quantity and determining the length description value based on the accumulation result, it does not necessarily mean that this statistic process is included in the actual preparation and acceptance process. In the actual solution, for any product, as long as the one-dimensional nanomaterials in the material layer are analyzed using values with the same statistically significance, the rule of obtained length description value meets the above description, that is, it does not deviate from the scope of protection of the present embodiment. In some solutions, the above length rule can be ensured by selecting the length of one-dimensional nanomaterials or specifically preparing the length of one-dimensional nanomaterials in advance.

Where, for the length description value for the one-dimensional nanomaterials of the material layer, for example, it may be as follows.

A value 110 of the one-dimensional nanomaterials in a material layer refers to: a length of corresponding one-dimensional nanomaterials when the quantity of the one-dimensional nanomaterials of respective lengths in the corresponding material layer is gradually accumulated in order from short to long, and a ratio of the accumulated quantity to the total quantity of the one-dimensional nanomaterials in the corresponding material layer reaches 10%;
a value 150 of the one-dimensional nanomaterials in the material layer refers to: a length of corresponding one-dimensional nanomaterials when the quantity of the one-dimensional nanomaterials of respective lengths in the corresponding material layer is gradually accumulated in order from short to long, and a ratio of the accumulated quantity to the total quantity of the one-dimensional nanomaterials in the corresponding material layer reaches 50%. The 150 can also be understood as characterizing the average length of the corresponding material layer to a certain extent;
a value 190 of the one-dimensional nanomaterials in the material layer refers to: a length of corresponding one-dimensional nanomaterials when the quantity of the one-dimensional nanomaterials of respective lengths in the corresponding material layer is gradually accumulated in order from short to long, and a ratio of the accumulated quantity to the total quantity of the one-dimensional nanomaterials in the corresponding material layer reaches 90%.

In the case of realizing the decrement of 150 (i.e., the average length), the decrement of one or more other length description values (for example, 190, 110) can also be realized.

In one embodiment,
a length value of L10 of the one-dimensional nanomaterials in the coating layer structure is between 100nm and 300nm;
a length value of L50 of the one-dimensional nanomaterials in the coating layer structure is between 250nm and 400nm;
a length value of L90 of the one-dimensional nanomaterials in the coating layer structure is between 350nm and 900nm;
where,
the L10 of the one-dimensional nanomaterials in the coating layer structure represents: a length description value of the one-dimensional nanomaterials in the coating layer structure when 10% is used as the first target proportion;
the L50 of the one-dimensional nanomaterials in the coating layer structure represents: a length description value of the one-dimensional nanomaterials in the coating layer structure when 50% is used as the first target proportion, which can also be referred to as the average length of the one-dimensional nanomaterials in the coating layer structure;
the L90 of the one-dimensional nanomaterials in the coating layer structure represents: a length description value of the one-dimensional nanomaterials in the coating layer structure when 90% is used as the first target proportion.

The length description value of the one-dimensional nanomaterials in the coating layer structure shows:
a length of corresponding one-dimensional nanomaterials when the quantity of the one-dimensional nanomaterials in the coating layer structure is gradually accumulated in order from short to long, and a ratio of the accumulated quantity to the total quantity of one-dimensional nanomaterials in the coating layer structure reaches the first target proportion;
and for the one-dimensional nanomaterials in the coating layer structure, it satisfies: L50/L10>1.3, and L90/L50>1.3;
the L10 of the one-dimensional nanomaterials in the coating layer structure represents: a length description value of the one-dimensional nanomaterials in the coating layer structure when 10% is used as the first target proportion;
the L50 of the one-dimensional nanomaterials in the coating layer structure represents: a length description value of the one-dimensional nanomaterials in the coating layer structure when 50% is used as the first target proportion, which can also be referred to as the average length of the one-dimensional nanomaterials in the coating layer structure;
the L90 of the one-dimensional nanomaterials in the coating layer structure represents: a length description value of the one-dimensional nanomaterials in the coating layer structure when 90% is used as the first target proportion.

The above description shows the statistical significance of the length description value of the coating layer structure. When the length description value is actually determined, an actual calculation method can be processed according to common sense in the field.

In addition, for the length description value of the coating layer structure, although the meaning of the length description value is defined above by accumulating the quantity and determining the length description value based on the accumulation result, it does not necessarily mean that this statistic process is included in the actual preparation and acceptance process. In the actual solution, for any product, as long as the one-dimensional nanomaterials in the material layer are analyzed using values with the same statistically significance, the rule of obtained length description value meets the above description, that is, it does not deviate from the scope of protection of the present embodiment. In some solutions, the above length rule can be ensured by selecting the length of one-dimensional nanomaterials or specifically preparing the length of one-dimensional nanomaterials in advance.

In one example, for the one-dimensional nanomaterials in the coating layer structure, L10=110nm, L50=310nm, and L90=850nm.

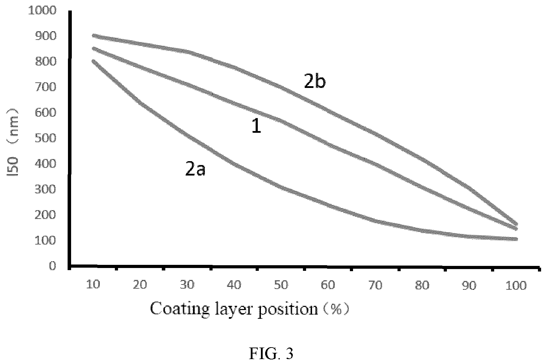

In a direction away from the base film, a fitting result of a relationship between the length value of 150 of the one-dimensional nanomaterials in respective material layers and a coating layer position where a material layer is located (a position in the thickness direction of the coating layer) can be understood with reference to the curves 1, 2a and 2b in FIG. 3. Furthermore, it can be reflected in the curves that as the thickness increases (that is, as a distance between the coating layer position where the material layer is located and the base film increases), the length value of L50 gradually decreases.

In FIG. 3, the coating layer position on the abscissa is to characterize: along the thickness direction, the location of the coating layer position in the coating layer structure, the material layer being located at the coating layer position; if it is characterized by a percentage, it can be characterized as: a percentage of a distance between the coating layer position and the base film relative to an overall thickness of the coating layer structure, the material layer being located at the coating layer position. For example, 10% means that the distance between the coating layer position and the base film accounts for 10% of the overall thickness of the coating layer structure.

For the curve 1, as the distance between the coating layer position where the material layer is located and the base film increases, the length value of 150 of the one-dimensional nanomaterials in the material layer can be fitted and understood as a linear change. At this time, the relationship between a length value x of the 150 and the coating layer position Y can be, for example, expressed as: Y= kx+b (k<0, b>0).

For the curve 2a, as the distance between the coating layer position where the material layer is located and the base film increases, the length values of 150 of the one-dimensional nanomaterials in the material layer can show a first fast and then slow change trend.

For the curve 2b, as the distance between the coating layer position where the material layer is located and the base film increases, the length values of 150 of the one-dimensional nanomaterials in the material layer can show a first slow and then fast change trend.

In order to realize the above change trend of linear change, first fast and then slow, and first slow and then fast, it can be realized through the length configuration of the one-dimensional nanomaterials in the coating layer structure. Furthermore, the length configuration of the one-dimensional nanomaterials in the coating layer structure can be selected according to the desired change trend.

For example, if a linear change is required (for example, as shown in the curve 1), the length configuration of the one-dimensional nanomaterials in the coating layer structure needs to satisfy: 2≥L90/L50>1.5;
if it is necessary to achieve a change trend that is first slow and then fast (for example, as shown in the curve 2b), the length configuration of the one-dimensional nanomaterials in the coating layer structure needs to satisfy: L50/L10>2, 1.5≥L90/L50≥1.3;
if it is necessary to achieve a change trend that is first fast and then slow (for example, as shown in the curve 2a), the length configuration of the one-dimensional nanomaterials in the coating layer needs to satisfy: L90/L50>2.

Since the prior art is not dedicated to forming a layered structure, it is impossible for the prior art to disclose or reveal the length configurations for different change trends in the above solutions.

At the same time, embodiments of the present invention also provide a battery, including the coated separator related to the above optional solution.

In addition, please refer to FIG. 2, an embodiment of the present invention also provides a preparation method for a coated separator for preparing the coated separator related to the first aspect and the alternatives thereof. The preparation method includes:
S1: dispersion of ceramics: dispersing the ceramic particles in a first solvent to obtain a ceramic dispersion liquid.

Specifically, ceramic particles are dispersed in a first solvent to obtain a dispersion liquid. The first solvent is selected from water, N-methylpyrrolidone, ethanol, acetone, etc. The dispersion modes are uniformly dispersed in the solvent through high-speed stirring, high-pressure homogenization, sand grinding and dispersion and other means. A mass concentration of the ceramic particles in the dispersion liquid is 2%-40%.

S2: dispersion of one-dimensional nanomaterials: dispersing the one-dimensional nanomaterials of different lengths in the same or different dispersants to obtain at least one one-dimensional nanomaterial dispersion liquid.

Specifically, one-dimensional nanomaterials of different lengths are dispersed in a dispersant to obtain a dispersion liquid. The dispersant is selected from water, N-methylpyrrolidone, ethanol, acetone, etc. The dispersion modesare uniformly dispersed in the dispersant through high-speed stirring, high-pressure homogenization, sand grinding and dispersion and other means. A mass concentration of the one-dimensional nanomaterials in the dispersant is 2%-30%.

Where, at least part of one-dimensional nanomaterials of different lengths are realized based on the selection of raw material for the one-dimensional nanomaterials. For example, when the one-dimensional nanomaterials made of different materials are selected, the one-dimensional nanomaterials of different lengths can be formed.

In other examples, the one-dimensional nanomaterials of different lengths can also be formed through corresponding technical means.

A raw material of a one-dimensional nanomaterial or a cut-off one-dimensional nanomaterial can be cut for once or more times, so as to form a one-dimensional nanomaterial of a different length.

Where, a shorter one-dimensional nanomaterial can be formed based on a raw material of a one-dimensional nanomaterial with a length by cutting the one-dimensional nanomaterial, for example, by cutting the one-dimensional nanomaterial into half of the raw material, and in other examples, by not cutting into half.

Any existing means or improved means that can realize the cutting of one-dimensional nanomaterials can be used as a specific example of the embodiment of the present invention. In a specific example, it can be realized by etching the one-dimensional nanomaterials, for example, by etching the one-dimensional nanomaterials into half the length of the raw material.

Based on the required layering, the raw material can be cut once or multiple times. For example, one-dimensional nanomaterials can be etched to half of a length of the raw materials, then a part of one-dimensional nanomaterials of half of the length can be retained, and the other part of one-dimensional nanomaterials of half of the length can be cut so as to obtain one-dimensional nanomaterials of quarter of the length. At this point, a three-layered structure may be formed. In other examples, a part of one-dimensional nanomaterials of quarter of the length can be further cut; and the number of cutting can be configured arbitrarily based on demand.

Of course, at least one of the following joining processes can also be implemented, and at least part of one-dimensional nanomaterials of different lengths can be formed through one or more times of joining:
joining one raw material of a one-dimensional nanomaterial to an end of another raw material;
joining one joined one-dimensional nanomaterial to an end of one raw material;
joining one joined one-dimensional nanomaterial to an end of another joined one-dimensional nanomaterial.

It can be seen that an object to be joined can be one end of one raw material and one end of another raw material; or, one end of one raw material and one end of one joined one-dimensional nanomaterial; or, one end of one joined one-dimensional nanomaterial and one end of another joined one-dimensional nanomaterial.

Where, through the joining of one-dimensional nanomaterials, a longer one-dimensional nanomaterial can be formed based on a raw material of a one-dimensional nanomaterial of a length. For example, two raw materials may be joined to form a one-dimensional nanomaterial with twice the length. In other examples, raw materials (or joined one-dimensional nanomaterials) of different lengths can also be used.

Any existing means or improved means that can realize the joining of one-dimensional nanomaterials can be used as a specific example of the embodiment of the present invention.

For example, the joining of one-dimensional nanomaterials can be achieved based on materials rich in a hydroxyl functional group (such as polyethylene glycol, PEG). Thus, the above-mentioned joining may include:
mixing one-dimensional nanomaterials to be joined with a material rich in hydroxyl functional group (e.g., PEG) in a solution;
adding molecular sieve particles as a catalyst to the solution;
heating the solution, then cooling down, and filtering to remove the molecular sieve particles, so as to obtain joined one-dimensional nanomaterials.

As a specific example, nanocellulose is taken as an example. A hydroxyl content of an end portion of nanocellulose is significantly higher than that of a middle region of nanocellulose. In order to increase a length of nanocellulose, the activity of hydroxyl groups can be fully utilized as follows:
(1) mixing nanocellulose and polyethylene glycol (PEG), where a molecular weight of PEG is 50000-1000000g/mol and PEG accounts for 1% of nanocellulose, and stirring the two components thoroughly to form a corresponding solution;
(2) adding 13A molecular sieve particles to the above solution, where a size of the molecular sieve particle is 1mm-10mm, and the molecular sieve serves as a catalyst;
(3) heating in water bath to 80 degrees for 1-2 hours;
(4) cooling to a normal temperature, filtering to remove the 13A molecular sieve particles, so as to obtain the joined nanocellulose.

In the above solutions, by adding the materials rich in hydroxyl functional group (such as PEG), it is possible to form a bridged connection between the nanocellulose; and using the molecular sieve (such as 13A molecular sieve) as a catalyst, the polymerization reaction between PEG and nanocellulose can be accelerated, so as to finally form a structure of nanocellulose-PEG-nanocellulose. Based on the required layering, it is possible to realize the joining of the raw material for one or more times. For example, the raw material of one-dimensional nanomaterial may be joined each other to obtain one-dimensional nanomaterials with twice the length of the raw materials first, then a part of the one-dimensional nanomaterials with twice the length can be retained, and then another part of one-dimensional nanomaterials with twice the length can be joined to the raw material or the one-dimensional nanomaterial with twice the length to obtain a one-dimensional nanomaterial with three times the length or four times the length. At this point, a three-layered structure may be formed. In other examples, further joining can be carried out, and the number of joining can be arbitrarily configured according to requirements.

In a solution of step S2, one-dimensional nanomaterials of various lengths can be dispersed in the same dispersant; and then based on the slurry corresponding to the same dispersant, delamination is achieved after coating. In another solution of step S2, different dispersants can also be formed based on one-dimensional nanomaterials of different lengths (the lengths of one-dimensional nanomaterials in different dispersants are different), and then different dispersion liquids and slurries can be formed. When coating, various slurries can also be coated in layers based on the length of the one-dimensional nanomaterials.

In one example, in step S2, one-dimensional nanomaterials of various lengths can be fully dispersed in a dispersant, and the dispersant, for example, can be selected from water, ethanol, methanol, etc. The dispersion method, for example, can be ultrasonic treatment, high-speed stirring, high-pressure homogenization, sand grinding and other methods, through which one-dimensional nanomaterials can be uniformly dispersed in the dispersant. The concentration of the one-dimensional nanomaterials in the dispersion liquid may range from 0.01 wt% to 50 wt%.

S3: mixing and slurry-forming: mixing the ceramic dispersion liquid and the one-dimensional nanomaterial dispersion liquid to form at least one corresponding slurry.

Specifically, the ceramic dispersion liquid obtained in step S1 is mixed with the one-dimensional nanomaterial dispersion liquid obtained in step S2, and the mixing method may adopt high-speed stirring, high-pressure homogenization, sand grinding and dispersion, etc. An adhesive is then added into the mixed solution. The adhesive is at least one of polyvinyl alcohol, polyacrylonitrile, polyacrylic acid, styrene-butadiene rubber, carboxymethylcellulose, polyvinylidene fluoride, polyvinylpyrrolidone and polyimide. The adhesive accounts for 1%-10% of a solid mass in the dispersion liquid.

S4: coating and film-forming: coating the at least one slurry to the base film, and drying the base film and the slurry to obtain the coated separator.

Specifically, through coating, the slurry prepared above is coated on the base film and dried, obtaining the coated separator. The coating methods are spray coating, dip coating, micro-gravure roller coating, printing coating, extrusion coating, and wire rod coating. The base film is, for example, a polyolefin base film with a thickness of 3µm -30 µm, a drying temperature of 40°C -130 °C, and a coating speed of 10 m/min -200 m/min.

Where, as a preferred way, before the dispersion of ceramics, the following is further included:
S11: ceramic screening: selecting first ceramic particles and second ceramic particles of different particle diameters, wherein an average particle diameter of the first ceramic particles is 10-60nm, and an average particle diameter of the second ceramic particles is 100-600nm;
S12: ceramic pretreatment: adding the first ceramic particles to a second solvent and putting them in a reaction kettle, adding a material to be grafted to perform a grafting reaction, so that a fast lithium-ion conductor functional groups are grafted on a surface of the first ceramic particles. Specifically, the first ceramic particles are added to the second solvent, and then put them into the reaction kettle together, and then the material to be grafted is added. Through a certain reaction temperature, reaction pressure, and reaction time, the fast lithium-ion conductor functional groups can be grafted on the first ceramic particles.

The first ceramic is not particularly limited, but it is preferably a material that has a melting point of 200°C or above, high electrical insulation property, and is electrochemically stable within a use range of a lithium ion battery. Examples include oxide-based ceramics such as alumina, silica, titanium oxide, zirconium dioxide, magnesium oxide, cerium oxide, yttria, and zinc oxide; and nitride-based ceramics such as silicon nitride, titanium nitride, and boron nitride; and ceramics such as silicon carbide, calcium carbonate, magnesium sulfate, aluminum sulfate, aluminum hydroxide oxide, potassium titanate, talc, kaolinite, clay, pearl clay, halloysite, pyrophyllite, montmorillonite, sericite, mica, amesite, bentonite, asbestos, zeolite, calcium silicate, magnesium silicate, diatomaceous earth, and silica sand, which can be used alone or in combination.

The second ceramic is not particularly limited, but it is preferably a substance that has a melting point of 200°C or above, high electrical insulation, and is electrochemically stable within a use range of a lithium ion battery. The same or different inorganic materials as the first ceramic can be selected. The second solvent is water, ethanol, acetone, NMP, etc., and the material to be grafted is polycarbonate, polylactic acid, polyurethane, perfluoropropyl vinyl ether, methyl isopropyl ketone, etc. The reaction temperature is 100°C -200°C, the reaction pressure is 0.1 Mpa -0.5Mpa, and the reaction time is 10 min -50min. After the reaction is completed, the liquid solvent is removed to leave a solid, and the first ceramic particles grafted with the fast lithium-ion conductor can be obtained.

On this basis, the dispersion of the ceramics in S1 is specifically implemented as follows:
the first ceramic particles pretreated in S12 are mixed with the second ceramic particles and then dispersed in the first solvent to obtain a ceramic dispersion liquid.

The product performance of some embodiments of the present invention will be analyzed through experiments below.

### Example 1

In the present embodiment, the coated separator is prepared through the following steps:
S1: ceramic screening: selecting first ceramic particles and second ceramic particles of different particle diameters; where, an average particle diameter of the first ceramic particles is 40 nm, an average particle diameter of the second ceramic particles is 300 nm, and both the first ceramic and the second ceramic are aluminum oxide;
S2: dispersion of ceramic: mixing the second ceramic particles and the first ceramic particles in a ratio of 1:1, and uniformly dispersing them in N-methylpyrrolidone through high-speed stirring to obtain a ceramic dispersion liquid; where, a mass concentration of ceramic in the dispersion liquid is 20%;
S3: dispersion of one-dimensional nanomaterials: dispersing the one-dimensional nanomaterials of different lengths in a dispersant to obtain a dispersion liquid, where, the dispersant is N-methylpyrrolidone, the dispersion method is high-speed stirring, and a mass concentration of one-dimensional nanomaterials in the dispersant is 15%;
S4: mixing and forming a slurry: mixing the ceramic dispersion liquid obtained in S2 with the one-dimensional nanomaterial dispersion liquid obtained in S3, where the mixing method adopted is high-speed stirring; then adding an adhesive to the mixed solution, the adhesive being polyvinyl alcohol; where, the adhesive accounts for 8% of a solid mass in the dispersion liquid;
S5: coating and forming film: coating the at least one slurry on the base film through coating, and drying the base film and the slurry to obtain the coated separator; where, the base film is a polyethylene film with a thickness of 9 µm, a drying temperature of 100 degrees, and a coating speed of 100m/min, and the resulting coating thickness is 2 µm.

Where, the one-dimensional nanomaterials are specifically one-dimensional nanofiber, which are deposited on a surface of the base film to form a layered structure (i.e., layered one-dimensional nanomaterials of different lengths). During a deposition process on the base film, due to the surface energy, the longest one-dimensional nanomaterials (which have the largest surface energy, is the most unstable, and are most likely to adhere once it comes into contact with an interface with a small surface energy) are deposited first, while the second longest ones are deposited later, and the shortest nanowire is finally deposited, forming a layered structure that gradually accumulates from long to short.

Examples 2-29 and Comparative examples 1-5 are also obtained, utilizing the same method. Where, referring to Table 1, performance of the corresponding separators in Examples 1-29 and Comparative examples 1-5 are illustrated. Except for the difference in preparation parameters listed in Table 1, all Examples and Comparative examples are consistent with Example 1 in other aspects, which will not be repeated again.

Where, Example 30 shown in Table 1 only differs from Example 1 in that a ceramic pretreatment step is performed before the step S2 dispersion of ceramic powder, which includes: adding the first ceramic particles to a second solvent, putting them together into a reaction kettle, then adding a material to be grafted, maintaining a certain reaction temperature, reaction pressure, and reaction time, and grafting a fast lithium-ion conductor functional group on the first ceramic particles. Where, the second solvent is acetone, and the material to be grafted is polycarbonate. The reaction temperature is 150°C, the reaction pressure is 0.3Mpa, and the reaction time is 20 minutes. After the reaction is completed, the liquid solvent is removed to leave a solid, and the first ceramic particles grafted with the fast lithium-ion conductor can be obtained.

**Table 1**

| Serial number | | Distribution of one-dimensi onal nanofiber | Diameter of one-dime nsional nanomater ials | Length of one-di mensio nal nanoma terials L50 | Primary particle diameter of first ceramic particles | Primary particle diameter of second ceramic particles | One-dime nsional nanomater ials to ceramic particles | First ceramic particles to second ceramic particles | Lithium ion conductivity (mS/cm) | Battery capacity retention rate after storage at 60°C for 30 days (%) | Anti-pu ncture force of coating layer (N) | Thermal contraction (180°C/h) |
|---|---|---|---|---|---|---|---|---|---|---|---|---|
| | Exa mpl e 1 | Layered distribution | 20 | 300 | 40 | 300 | 1:1 | 1:1 | 1 | 93 | 7 | 1.5 |
| | Exa mple 2 | Layered distribution | 20 | 300 | 40 | 300 | 1:5 | 1:1 | 1.2 | 91 | 10 | 2 |
| | Exa mpl e 3 | Layered distribution | 20 | 300 | 40 | 300 | 1:8 | 1:1 | 1.25 | 91 | 11 | 22 |
| Comparison of the proportions of fiber to ceramic | Exa mpl e 4 | Layered distribution | 20 | 300 | 40 | 300 | 1:10 | 1:1 | 1.33 | 91 | 13 | 2.5 |
| | Exa mpl e 5 | Layered distribution | 20 | 300 | 40 | 300 | 1:12 | 1:1 | 1.4 | 90 | 15 | 2.8 |
| | Exa mpl e 6 | Layered distribution | 20 | 300 | 40 | 300 | 1:14 | 1:1 | 1.43 | 90 | 15 | 3.1 |
| | Exa mpl e 7 | Layered distribution | 20 | 300 | 40 | 300 | 1:15 | 1:1 | 1.4 | 86 | 17 | 17 |
| | Exa mpl e 8 | Layered distribution | 20 | 300 | 40 | 300 | 2:1 | 1:1 | 0.6 | 94 | 6 | 1.6 |
| No ceramic | Co mp arat ive exa mpl e 1 | Layered distribution | 20 | 300 | / | / | / | / | 0.4 | 94 | 4 | 1.5 |
| No nanofiber | Co mp arat ive exa mpl e 2 | Layered distribution | / | / | 40 | 300 | 0 | 1:1 | 1.1 | 84 | 18 | 15 |
| | Exa mpl e 9 | Layered distribution | 20 | 300 | 40 | 300 | 1:1 | 7:1 | 0.8 | 92 | 5 | 1.5 |
| | Exa mpl e 10 | Layered distribution | 20 | 300 | 40 | 300 | 1:1 | 3:1 | 0.85 | 92.5 | 6 | 1.6 |
| | Exa mpl e 11 | Layered distribution | 20 | 300 | 40 | 300 | 1:1 | 5:1 | 0.9 | 93 | 7 | 1.6 |
| | Exa mpl e 12 | Layered distribution | 20 | 300 | 40 | 300 | 1:1 | 1:5 | 1 | 92 | 8 | 1.6 |
| | Exa mpl e 13 | Layered distribution | 20 | 300 | 40 | 300 | 1:1 | 1:3 | 1.1 | 91 | 8 | 1.6 |
| Comparison between nano-cerami c and sub-micron ceramic | Exa mpl e 14 | Layered distribution | 20 | 300 | 40 | 300 | 1:1 | 1:7 | 0.8 | 90 | 10 | 5.4 |
| | Exa mpl e 15 | Layered distribution | 20 | 300 | 10 | 300 | 1:1 | 1:1 | 0.9 | 93 | 7 | 1.5 |
| | Exa mpl e 16 | Layered distribution | 20 | 300 | 25 | 400 | 1:1 | 1:1 | 1 | 92 | 7 | 1.5 |
| | Exa mpl e 17 | Layered distribution | 20 | 300 | 10 | 600 | 1:1 | 1:1 | 0.8 | 90 | 8 | 1.5 |
| | Exa mpl e 18 | Layered distribution | 20 | 300 | 50 | 100 | 1:1 | 1:1 | 0.8 | 91 | 7 | 1.5 |
| | Exa mpl e 19 | Layered distribution | 20 | 300 | 60 | 300 | 1:1 | 1:1 | 1 | 91 | 7 | 1.5 |
| | Exa mpl e 20 | Layered distribution | 20 | 300 | 30 | 600 | 1:1 | 1:1 | 1 | 92 | 7 | 1.5 |
| | Exa mpl e 21 | Layered distribution | 20 | 300 | 40 | 600 | 1:1 | 1:1 | 1.2 | 90 | 10 | 1.6 |
| | Exa mpl e 22 | Layered distribution | 20 | 300 | 15 | 375 | 1:1 | 1:1 | 0.9 | 91 | 8 | 1.5 |
| | Example 23 | Layered distribution | 20 | 300 | 10 | 400 | 1:1 | 1:1 | 0.85 | 91 | 8 | 1.5 |
| | Example 24 | Layered distribution | 20 | 300 | 5 | 300 | 1:1 | 1:1 | 0.7 | 93 | 7 | 1.5 |
| | Example 25 | Layered distribution | 20 | 300 | 100 | 300 | 1:1 | 1:1 | 1.1 | 88 | 7 | 2.1 |
| | Example 26 | Layered distribution | 20 | 300 | 40 | 50 | 1:1 | 1:1 | 0.7 | 94 | 5 | 1.5 |
| | Example 27 | Layered distribution | 20 | 300 | 40 | 800 | 1:1 | 1:1 | 1.3 | 86 | 13 | 5.6 |
| | Example 28 | Layered distribution | 20 | 300 | 40 | / | 1:1 | / | 0.7 | 93 | 4 | 1.5 |
| | Example 29 | Layered distribution | 20 | 300 | / | 300 | 1:1 | 0 | 1.0 | 86 | 9 | 4.5 |
| Grafting treatment | Example 30 | Layered distribution | 20 | 300 | 40 | 300 | 1:1 | 1:1 | 1.7 | 95 | 7 | 1.5 |
| Layering comparison | Co mp arat ive Example3 | Non-layerin g | 20 | 300 | 40 | 300 | 1:1 | 1:1 | 0.9 | 86 | 7 | 1.5 |
| | Co mp arat ive exampl e 4 | Non-layerin g | 20 | 300 | 40 | 300 | 1:5 | 1:1 | 0.95 | 86 | 10 | 2 |
| | Co mp arat ive Example 5 | Non-layerin g | 20 | 300 | 40 | 300 | 1:12 | 1:1 | 1 | 85 | 15 | 2.8 |

From Table 1, according to the comparison of Examples 1-8, it can be seen that when an excessive amount of one-dimensional nanomaterial (Example 8) is added, the lithium ion conductivity of the coated separator is much lower, as compared to adding other proportions of one-dimensional nanomaterials. When there is an excessive amount of ceramic particles (Example 7), the battery capacity retention rate of the coated separator decreases, and the thermal contraction decreases; when a ratio of one-dimensional nanomaterials to ceramic is (1:1-1:14), as a proportion of ceramic increases, the battery capacity retention rate at high-temperature gradually decreases, the lithium ion conductivity gradually increases, the anti-puncture property gradually improves, and the heat resistance gradually decreases. The main reason for this phenomenon is that an increase in the proportion of ceramic particles can further expand the gaps between fiber layers, thereby increasing the lithium ion conductivity. However, if the gaps are large, self-discharge will be enhanced, leading to attenuation of the storage capacity under high-temperature; the expansion of the gaps will also lead to reduced contact between coating layer materials, resulting in poor heat resistance in a hot environment; and the anti-puncture property of the ceramic particles is better than that of the one-dimensional nanomaterials, so the anti-puncture property is improved.

It can be seen from the comparison of Examples 9-14 that, among ceramics, as a proportion of second ceramic particles (sub-micron ceramic) increases (Examples 9-13), the lithium ion conductivity of the coated separator gradually increases, the battery capacity retention rate gradually decreases, the anti-puncture property gradually increases, and the heat resistance remains unchanged. However, when a content of the first ceramic particles (nanoceramic) is too high (Example 9), the lithium ion conductivity of the coated separator is low and the anti-puncture property is poor; and when a content of the nanoceramic is too low (Example 14), the heat resistance of the coated separator is larger. The main reason for this phenomenon is that sub-micron ceramics are beneficial to increasing the large gaps in the coating layer, which in turn can improve the conductivity of lithium batteries, and large-size ceramic particles have excellent anti-puncture property. However, if the gaps are too large, self-discharge is enhanced, resulting in an attenuation of the high-temperature storage capacity; the expansion of the gaps also leads to a decrease in the contact between coating layer materials, resulting in poor heat resistance in a hot environment.

From the comparison of Examples 15-27, it can be seen that when the particle diameter of the nanoceramic is too small (Example 24), the lithium ion conductivity of the coated separator is low; when the particle diameter of the nanoceramic is too large (Example 25), the battery capacity retention rate of the coated separator is low; when the particle diameter of the sub-micron ceramic is too small (Example 26), the lithium ion conductivity of the coated separator is low, and the anti-puncture property is reduced; when the particle diameter of the sub-micron ceramic is too large (Example 27), the battery capacity retention rate of the coated separator is low, and the heat resistance is reduced. The main reason for this phenomenon is that when the particle diameter of the nanoceramic is small, the agglomeration problem becomes more serious, which in turn leads to a narrowed lithium ion transmission channel and a low lithium ion conductivity; when the particle diameter of the nanoceramic is too large, the gaps in the coating layer increase, which in turn increases self-discharge and decreases the battery capacity retention rate; when the particle diameter of the sub-micron ceramic is small, the gaps in the coating layer become narrower, the lithium ion conductivity decreases, and the reduction in size weakens the ability to resist external puncture; when the diameter of the sub-micron ceramic particle is too large, the gaps in the coating layer will increase sharply, resulting in a decrease in battery capacity retention rate. In addition, excessively large gaps will cause the coated separator to be prone to gap narrowing when forming the separator, which is macroscopically manifested as a decrease in heat resistance.

It can be seen from Comparative examples 1 and 2 that when there is only one-dimensional nanomaterial in the coating layer, the coated separator has excellent heat resistance, but the lithium ion conductivity and anti-puncture property are poor; when there are only nanoceramics in the coating layer, the heat resistance of the coated separator decreases and the anti-puncture property decreases, but it has very excellent lithium ion conductivity; when there are only sub-micron ceramics in the coating layer, the heat resistance of the coated separator decreases significantly, and the lithium ion transmission capacity is small, but it has high anti-puncture property. It can be seen from the comparison of Examples 1-8 that when the ratio of one-dimensional nanomaterials to ceramic exceeds 1:1 (Examples), the lithium ion transmission capacity and anti-puncture property of the coated separator are not improved. When the ratio of one-dimensional nanomaterials to ceramic is lower than 1:14 (Example 7), the lithium ion transmission capacity and anti-puncture property of the coated separator are significantly improved, but the heat resistance decreases significantly. When the ratio of the first ceramic to the second ceramic exceeds 6:1 (Example 9), the heat resistance and lithium ion transmission capacity of the coated separator are relatively high, but the anti-puncture property decreases. When the ratio of the first ceramic to the second ceramic is lower than 1:6 (Example 13), the heat resistance and anti-puncture property of the coated separator are improved, but the lithium ion transmission capacity is reduced. Only when the ratio of the three is within a certain range, the various indicators of the coated separator can have the best comprehensive performance (Example 5).

From the comparison of Examples 1, 2, 5 and Comparative examples 3-5, it can be seen that when the one-dimensional nanomaterial is not delaminated, the lithium ion conductivity of the coated separator is low, and the battery capacity retention rate decreases. The main reason for this phenomenon is that if the one-dimensional nanomaterial is not delaminated, the agglomeration phenomenon between the materials will be very serious. The agglomerates will block the pores of the base film, resulting in low lithium ion conductivity; in addition, the sizes of the voids are different, and the self-discharge problem is serious, which will lead to the decline of capacity retention rate.

In the description of this specification, the description of referring to "an implementation mode", "an embodiment", "specific implementation process", "an example", etc. means that the specific features, structures, materials, or characteristics described in conjunction with the embodiment or example, are included in at least one embodiment or example of the invention. In this specification, schematic representations of the above terms do not necessarily refer to the same embodiment or example. Furthermore, the specific features, structures, materials or characteristics described can be combined in any suitable manner in any one or more embodiments or examples.

Finally, it should be noted that, the above embodiments are only used to illustrate the technical solutions of the present invention, but not to limit them. Although the present invention has been described in detail with reference to the foregoing embodiments, those skilled in the art should understand that: the technical solutions described in the foregoing embodiments can still be modified, or some or all of the technical features thereof can be equivalently replaced; and these modifications or replacements do not make the essence of the corresponding technical solutions deviate from the scope of technical solutions of the embodiments of the present invention.

## Claims

1. A coated separator, comprising: a base film and a coating layer structure provided on at least one surface of the base film; wherein the coating layer structure contains multiple material layers, and the coating layer structure contains one-dimensional nanomaterials and ceramic particles, and in a direction away from the base film, an average length of the one-dimensional nanomaterials in each material layer gradually decreases layer by layer.

2. The coated separator according to claim 1, wherein a proportion of a thickness of a coating layer distributed with ceramic particles to a total thickness of the coating layer structure reaches than 80% or more; preferably reaches 90% or more; and more preferably, reaches 100%.

3. The coated separator according to claim 1 or 2, wherein a mass ratio of the one-dimensional nanomaterials to the ceramic particles in the coating layer structure is 1:1-1:14.

4. The coated separator according to claim 3, wherein the ceramic particle comprises first ceramic particles and second ceramic particles; a particle diameter of the second ceramic particles is larger than a particle diameter of the first ceramic particles, and the particle diameter of the second ceramic particles is two or more times a diameter of the one-dimensional nanomaterials;
further, the particle diameter of the second ceramic particles differs from the diameter of the one-dimensional nanomaterials by at least one order of magnitude,
and/or, the particle diameter of the second ceramic particles differs from the diameter of the first ceramic particles by at least one order of magnitude;
further, the diameter of the one-dimensional nanomaterials is 5-50 nm, an average particle diameter of the first ceramic particles is 10-60 nm, and an average particle diameter of the second ceramic particles is 100-600 nm.

5. The coated separator according to claim 4, wherein in the coating layer structure, a mass ratio of the first ceramic particles to the second ceramic particles is 5:1-1:5.

6. The coated separator according to claim 4, wherein the first ceramic particle and/or the second ceramic particle is an inorganic substance, the inorganic substance having a melting point 200°C or more, being electrically insulating, and being electrochemically stable within a use range of lithium battery.

7. The coated separator according to any one of claims 1 to 5, wherein a surface of the first ceramic particle is grafted with a fast lithium-ion conductor functional group;
further, the fast lithium-ion conductor functional group comprises any one of hydroxyl (-OH), carbonyl (-C=O), fluorine (-F), and carboxyl (-COOH).

8. The coated separator according to claim 1, wherein the coated separator at least meets any of the following conditions:
a) anti-puncture force of coating layer ≥ 7N;
b) ion conductivity ≥ 0.8;
c) capacity retention rate ≥90%;
d) thermal contraction at 180°C/h ≤ 4%.

9. A preparation method for coated separator, for preparing the coated separator according to any one of claims 1 to 8, comprising:
dispersion of ceramic: dispersing the ceramic particles in a first solvent to obtain a ceramic dispersion liquid;
dispersion of one-dimensional nanomaterial: dispersing the one-dimensional nanomaterial of different lengths in the same or different dispersants to obtain at least one one-dimensional nanomaterial dispersion liquid;
mixing and forming a slurry: mixing the ceramic dispersion liquid and the one-dimensional nanomaterial dispersion liquid to form at least one corresponding slurry;
coating and forming a film: coating the at least one slurry on at least one surface of the base film and drying to obtain the coated separator.

10. The preparation method for coated separator according to claim 9, wherein, before the dispersion of ceramic, the method further comprises:
ceramic screening: selecting first ceramic particles and second ceramic particles of different particle diameters, wherein an average particle diameter of the first ceramic particles is 10-60nm, and an average particle diameter of the second ceramic particles is 100-600nm;
further, the method comprises a pretreatment for ceramic: adding the first ceramic particles to a second solvent and placing them in a reaction kettle, adding a material to be grafted to perform a grafting reaction, so that a fast lithium-ion conductor functional group is grafted on a surface of the first ceramic particles.

11. The preparation method for coated separator according to claim 10, wherein the material to be grafted comprises any one of polycarbonate, polylactic acid, polyurethane, perfluoropropyl vinyl ether, and methyl isopropyl ketone.

12. The preparation method for coated separator according to claim 10, wherein the dispersion of ceramics specifically comprises:
mixing pretreated first ceramic particles and the second ceramic particles and dispersing them in the first solvent to obtain a ceramic dispersion liquid.

13. A battery, comprising the coated separator according to any one of claims 1 to 8 or comprising a coated separator prepared by the preparation method for coated separator according to any one of claims 9 to 12;
further, the battery is a lithium battery.
